# EUROPEAN PATENT APPLICATION

(11) **EP 4 778 908 A1**
(43) Date of publication of application: **22.07.2026**
(21) Application number: 24865704.1
(22) Date of filing: 16.08.2024
(51) Int. Cl.: C04B 41/50, C04B 41/89, C04B 41/85, C04B 41/45, C04B 35/52

(54) **TANTALUM CARBIDE COMPOSITE MATERIAL AND METHOD FOR MANUFACTURING TANTALUM CARBIDE COMPOSITE MATERIAL**

(30) Priority: 15.09.2023 KR 20230123127
(71) Applicant: Tokai Carbon Korea Co., Ltd, Anseong-si, Gyeonggi-do 17602 (KR)
(72) Inventor: JO, Dong Wan, Anseong-Si, Gyeonggi-do 17602 (KR)
(74) Representative: V.O.
(86) International application number: PCT/KR2024/012168
(87) International publication number: WO 2025/058263

(57) **Abstract**

Disclosed are a tantalum carbide composite material and a method for manufacturing the tantalum carbide composite material. The tantalum carbide composite material comprises: a substrate; a buffer layer deposited on the entire surface of the substrate; and a tantalum carbide layer deposited on the upper surface of the buffer layer.

## Description

### TECHNICAL FIELD

The present disclosure relates to a tantalum carbide composite material and a method of manufacturing a tantalum carbide composite material according to embodiments.

### BACKGROUND ART

When a susceptor part used in semiconductor manufacturing equipment uses a carbon material that has been used in conventional semiconductor processes as it is, there is a problem that the carbon material is etched by corrosive gas, and thus a part in which silicon carbide (SiC) or tantalum carbide (TaC) is coated on a surface of a structure of the carbon material is being used.

A tantalum carbide composite material in which tantalum carbide (TaC) is coated on a surface of a carbon material generates stress due to a difference in coefficient of thermal expansion between the carbon material and the tantalum carbide film, and thus problems such as cracking, warpage, and delamination occur, which affects damage and the lifespan of parts to which it is applied.

### DISCLOSURE OF THE INVENTION

### TECHNICAL GOALS

A part coated with tantalum carbide (TaC) uses a tantalum carbide composite material in which tantalum carbide (TaC) is coated on a surface of a carbon material, and problems such as warpage, cracking, and delamination may occur due to thermal stress generated by a difference in coefficient of thermal expansion between a carbon substrate and tantalum carbide. Accordingly, development of a buffer layer for relieving thermal stress between the carbon substrate and the tantalum carbide film is required.

To solve the above-mentioned problems, according to an embodiment, the present disclosure may provide a tantalum carbide composite material and a method of manufacturing a tantalum carbide composite material, which are suitable for stress relaxation between a substrate and a tantalum carbide film (e.g., a tantalum carbide coating layer) and in which a buffer layer for stress relaxation is introduced.

According to an embodiment, by introducing a buffer layer suitable for stress relaxation between a substrate and a tantalum carbide film and for stress relaxation, stress between the tantalum carbide film and the carbon substrate may be reduced, and a tantalum carbide composite material in which warpage, cracking, delamination, and the like are alleviated may be provided.

According to an embodiment, an application of a tantalum carbide composite material in which a buffer layer suitable for stress relaxation and for stress relaxation is introduced according to embodiments of the present disclosure may be provided. According to an embodiment, a part for semiconductor manufacturing, which includes a tantalum carbide composite material in which a buffer layer suitable for stress relaxation and for stress relaxation is introduced according to embodiments of the present disclosure, and which is capable of improving lifespan stability and stability and process efficiency of a semiconductor manufacturing process, may be provided.

However, technical goals to be achieved are not limited to those described above, and other goals not mentioned above can be clearly understood by one of ordinary skill in the art from the following description.

### TECHNICAL SOLUTIONS

According to embodiments of the present disclosure, a tantalum carbide composite material may include a substrate; a buffer layer deposited on the substrate; and a tantalum carbide layer deposited on an upper surface of the buffer layer.

According to an embodiment, the buffer layer may include a material of Van-der-Waals bonding.

According to an embodiment, the material of Van-der-Waals bonding may include at least one of pyrolytic carbon, BN, MoS₂, WSe₂, ReS₂, and MoTe₂, or a combination thereof.

According to an embodiment, the buffer layer may have a coefficient of thermal expansion in a lateral direction of a formation surface and a coefficient of thermal expansion in a vertical direction of the formation surface that are different from each other.

According to an embodiment, the coefficient of thermal expansion in the vertical direction of the formation surface of the buffer layer may be greater than the coefficient of thermal expansion in the lateral direction of the formation surface.

According to an embodiment, the coefficient of thermal expansion in the vertical direction of the formation surface of the buffer layer may be about 6.0 x 10⁻⁶/K to about 7.0 x 10⁻⁶/K, and the coefficient of thermal expansion in the lateral direction of the formation surface of the buffer layer may be about 0.2 x 10⁻⁶/K to about 0.7 x 10⁻⁶/K.

According to an embodiment, the coefficient of thermal expansion in the vertical direction of the formation surface of the buffer layer may satisfy at least one or all of the following conditions:
i) lower than a coefficient of thermal expansion of the tantalum carbide layer;
ii) higher than a coefficient of thermal expansion of the substrate; and
iii) higher than an intermediate value of coefficients of thermal expansion of the substrate and the tantalum carbide layer.

According to an embodiment, a thickness of the buffer layer may be about 1 µm (micrometer) to about 100 µm (micrometer).

According to an embodiment, a thickness of the tantalum carbide layer may be about 10 µm (micrometer) to about 100 µm (micrometer).

According to an embodiment, the buffer layer may be formed in a layered structure with respect to an upper surface of the substrate.

According to an embodiment, the tantalum carbide layer may be crack-free. According to an embodiment, the substrate may include at least one of graphene, graphite, and fullerene, or a combination thereof.

According to an embodiment, warpage of the tantalum carbide composite material may be about 10 µm (micrometer) to about 50 µm (micrometer).

According to an embodiment, the tantalum carbide layer may include a crack having a width of about 0.3 µm (micrometer) to about 0.6 µm (micrometer).

According to embodiments of the present disclosure, a method of manufacturing a tantalum carbide composite material may include preparing a substrate; forming a buffer layer on the substrate; and forming a tantalum carbide layer on the buffer layer, wherein the buffer layer may include a material of Van-der-Waals bonding, and the buffer layer may be formed on at least one surface or an entire surface of the substrate.

According to an embodiment, the forming of the tantalum carbide layer may form a single film on the buffer layer.

According to an embodiment, the forming of the buffer layer may deposit the buffer layer at a temperature of about 1,500°C to about 1,900°C and a pressure of about 500 torr to about 900 torr.

According to an embodiment, the forming of the tantalum carbide layer may deposit a tantalum carbide film at a temperature of about 1,900°C to about 2,300°C and a pressure of about 200 torr to about 400 torr.

According to an embodiment, the forming of the buffer layer and the forming of the tantalum carbide layer may use a CVD process.

According to an embodiment, the forming of the buffer layer may form a buffer layer including a material of Van-der-Waals bonding, and the material of Van-der-Waals bonding may include at least one of pyrolytic carbon, BN, MoS₂, WSe₂, ReS₂, and MoTe₂, or a combination thereof.

According to an embodiment, the method may manufacture a tantalum carbide composite material according to embodiments of the present disclosure.

### EFFECTS OF THE INVENTION

The present disclosure may provide a tantalum carbide composite material and a method of manufacturing the same, in which stress between the tantalum carbide film and the carbon substrate is reduced by introducing a buffer layer for stress relaxation between a substrate and a tantalum carbide film, and in which warpage, cracking, delamination, and the like are alleviated. The present disclosure may provide a part (e.g., a part for plasma processing) including a tantalum carbide composite material according to embodiments of the present disclosure.

### BRIEF DESCRIPTION OF DRAWINGS

FIG. 1A illustratively shows a configuration of a tantalum carbide composite material in which a tantalum carbide film is formed on one surface of a substrate, according to an embodiment.
FIG. 1B illustratively shows a configuration of a tantalum carbide composite material in which a tantalum carbide film is deposited on a substrate, according to an embodiment.
FIG. 2 illustratively shows a configuration of a substrate and a buffer layer in the tantalum carbide composite material of FIG. 1B, according to an embodiment.
FIG. 3 shows a cross-sectional SEM image of a tantalum carbide composite material, according to an embodiment.
FIG. 4A is an SEM image of Comparative Example 1, which is obtained by measuring an SEM image of a surface of a tantalum carbide layer in a tantalum carbide composite material, according to an embodiment.
FIG. 4B is an SEM image of Example 4, which is obtained by measuring an SEM image of a surface of a tantalum carbide layer in a tantalum carbide composite material, according to an embodiment.
FIG. 4C is an SEM image of Example 1, which is obtained by measuring an SEM image of a surface of a tantalum carbide layer in a tantalum carbide composite material, according to an embodiment.
FIG. 5 shows a width size of a fine crack of a tantalum carbide composite material, according to an embodiment.
FIG. 6 shows a warpage size of a tantalum carbide composite material, according to an embodiment.
FIG. 7A schematically shows an example of a stress relaxation mechanism using a tantalum carbide composite material, according to an embodiment.
FIG. 7B schematically shows an example of a stress relaxation mechanism using a tantalum carbide composite material, according to an embodiment.

### BEST MODE FOR CARRYING OUT THE INVENTION

Hereinafter, embodiments of the present disclosure will be described in detail with reference to the accompanying drawings. When it is determined that detailed description related to a related known function or configuration may make the purpose of the present disclosure unnecessarily ambiguous in describing the present disclosure, the detailed description will be omitted here. In addition, terminologies used herein are defined to appropriately describe the example embodiments and thus may be changed depending on a user, the intent of an operator, or a custom of a field to which the present disclosure pertains. Accordingly, the terminologies must be defined based on the following overall description of the present specification. In the drawings, like reference numerals are used for like elements.

In the whole specification, when a member is positioned "on" another member, this not only includes a case that the member is brought into contact with the other member, but also includes a case that another member exists between two members.

It will be understood that when a certain part "includes" a certain component, the part does not exclude another component but may further include another component.

Hereinafter, the tantalum carbide composite material and the method of manufacturing a tantalum carbide composite material of the present disclosure will be described in detail with reference to embodiments and drawings. However, the present disclosure is not limited to the embodiments and drawings.

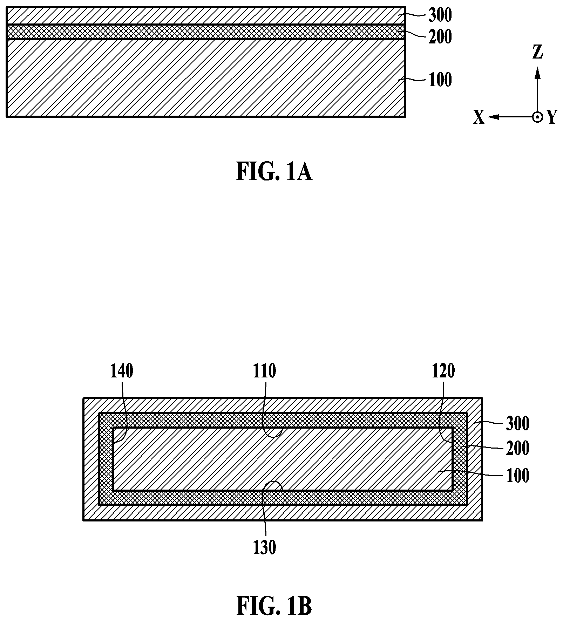

According to an embodiment, FIGS. 1A and 1B illustratively show a configuration of a tantalum carbide composite material, and in FIG. 1A, the tantalum carbide composite material includes a substrate 100; and a tantalum carbide layer 300, and may include a buffer layer 200 between the substrate 100 and the tantalum carbide layer 300.

According to an embodiment, the substrate 100 may be appropriately selected depending on the use of the tantalum carbide composite material. In some examples, the substrate 100 may be a carbon substrate in consideration of the tantalum carbide layer 300 and the coefficient of thermal expansion. In some examples, the substrate 100 may include graphene, graphite, or fullerene, or a combination thereof. In some examples, the substrate 100 may be graphene or graphite.

According to an embodiment, the thickness of the substrate 100 may be about 1 mm (millimeter) to about 10 mm (millimeter). In some examples, the thickness may be about 1 mm to about 10 mm; about 1 mm to about 8 mm; about 1 mm to about 6 mm; about 1 mm to about 4 mm; or about 1 mm to about 3 mm. In some examples, when included within the above-mentioned range of the thickness of the substrate 100, deformation of the substrate 100 after deposition of the tantalum carbide layer 300 may be minimized, and lifespan and process stability of a part to which the tantalum carbide composite material having the buffer layer 200 introduced therein is applied may be improved.

According to an embodiment, the buffer layer 200 is formed on the substrate 100, and for example, the buffer layer 200 may be formed (e.g., deposited) on at least a portion or an entire surface of at least one surface or an entire surface of the substrate 100. In some examples, referring to FIG. 1A, the buffer layer 200 may be formed on at least a portion or an entire surface of one surface (e.g., an upper surface or a lower surface) of the substrate 100. In some examples, referring to FIG. 1B, the buffer layer 200 may be formed on at least a portion of the entire surface of the substrate 100 or on an entirety of the entire surface (e.g., the upper surface, the lower surface, and a side surface) so as to surround the substrate 100.

According to an embodiment, the buffer layer 200 may include one or two or more materials of Van-der-Waals bonding. In some examples, the buffer layer 200 to which a material of Van-der-Waals bonding is applied may alleviate a difference in physical properties (e.g., stress due to a difference in coefficient of thermal expansion) between the substrate 100 and the tantalum carbide layer 300. For example, stress due to a difference in coefficient of thermal expansion between the substrate 100 and the tantalum carbide layer 300 may be alleviated, thereby reducing occurrence of cracking (e.g., warpage) and delamination.

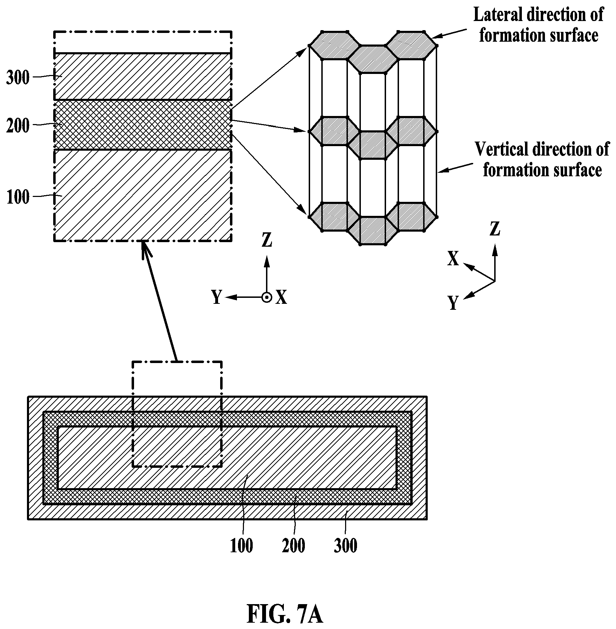

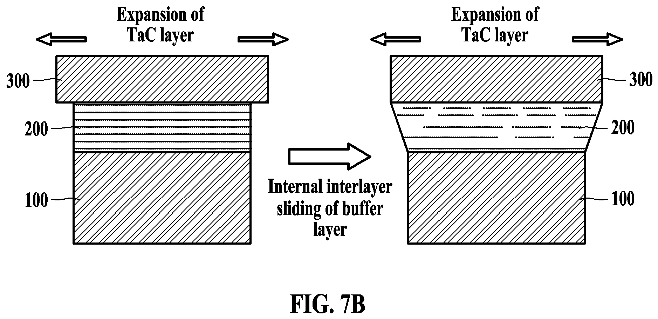

According to an embodiment, the material of Van-der-Waals bonding may include at least one selected from the group consisting of pyrolytic carbon, BN (e.g., hexagonal boron nitride (h-BN)), MoS₂, WSe₂, ReS₂, MoTe₂, and combinations thereof. In some examples, the buffer layer 200 may include a layered structure having numerous Van-der-Waals bonding (e.g., bonding in a vertical direction of a formation surface) layers with respect to a formation surface (or a deposition surface) of the buffer layer 200 by applying a material of Van-der-Waals bonding. When expanding in a lateral direction of the formation surface as thermal expansion occurs during a deposition process of TaC, lateral bonding of the formation surface is not broken and vertical bonding of the formation surface is broken, and internal delamination occurs and interlayer sliding occurs. That is, even if internal delamination occurs multiple times within the layered structure, it is effectively expanded in accordance with the expansion of TaC through interlayer sliding due to Van-der-Waals bonding characteristics and is able to withstand the expansion of TaC (FIGS. 7A and 7B).

According to an embodiment, a source material for forming (e.g., depositing) the material of Van-der-Waals bonding may be used, and the source material may be appropriately selected depending on a forming process (e.g., a deposition process). The source material may be appropriately selected depending on the process in a phase such as gas or solid (powder). In some examples, in examples of the source material, pyrolytic carbon may be formed by pyrolyzing a carbon-based material including at least one or more selected from hydrocarbons (CₓH_{y}) (where x and y are natural numbers and 1<x<6). For example, the hydrocarbon may be selected from propane (C₃H₈), butane (C₄H₁₀), propylene (C₃H₆), or acetylene (C₂H₂), and combinations thereof. In some examples, an example of the source material may be, but is not limited to, a BN source material (e.g., B₂H₆ and/or NH₃), a MoS₂ source material (e.g., S powder and MoO₂ powder), a WSe₂ source material (e.g., WO₃ powder and Se gas), a ReS₂ source material (e.g., NH₄ReO₄ (ammonium perrhenate) (precursor (solid)) and S gas), or a MoTe₂ source material (e.g., Te powder + MoCl₅ and MoO₃ powder). For example, pyrolytic carbon may be a carbon-based material generated by pyrolyzing a hydrocarbon gas at the temperature (e.g., the deposition temperature, the CVD deposition temperature, or the heat treatment temperature) of about 1,100°C to about 2,000°C; about 1,300°C to about 2,000°C; about 1,400°C to about 2,000°C; about 1,500°C to about 1,900°C; about 1,600°C to about 1,900°C; or about 1,700°C to about 1,800°C. A forming process of the buffer layer of the present disclosure may be referred to in a manufacturing method process described below.

According to an embodiment, the thickness of the buffer layer 200 may be about 1 µm to about 50 µm. In some examples, the thickness of the buffer layer may be about 1 µm to about 5 µm; about 1 µm to about 10 µm; about 1 µm to about 15 µm; about 1 µm to about 20 µm; about 1 µm to about 25 µm; about 1 µm to about 30 µm; about 1 µm to about 35 µm; about 1 µm to about 40 µm; about 1 µm to about 45 µm; or about 1 µm to about 50 µm. In some examples, the thickness of the buffer layer may be about 2 µm to about 5 µm; about 2 µm to about 10 µm; about 2 µm to about 13 µm; about 2 µm to about 17 µm; about 2 µm to about 25 µm; about 2 µm to about 32 µm; about 2 µm to about 41 µm; or about 2 µm to about 48 µm. In some examples, the thickness of the buffer layer may be about 5 µm to about 12 µm; 5 µm to about 20 µm; about 5 µm to about 23 µm; about 5 µm to about 34 µm; or about 5 µm to about 43 µm. In some examples, the thickness of the buffer layer within the above range may reduce stress due to a difference in coefficient of thermal expansion between the substrate 100 and the tantalum carbide layer 300, thereby preventing occurrence of cracks, pinholes, and the like, in the tantalum carbide film 300, and may improve lifespan and process stability of a part to which the tantalum carbide composite material is applied.

According to an embodiment, the tantalum carbide layer 300 may be formed on at least a portion or an entirety of the buffer layer 200, and may be formed as a single film. The single film may be a single layer or a plurality of layers.

According to an embodiment, the atomic ratio of Ta to C in the tantalum carbide layer 300 may be about 0.9 to about 1.34 : about 1; about 0.1 to about 1.34 : about 1; about 1.0 to about 1.34 : about 1; about 1.1 to about 1.34 : about 1; about 1.2 to about 1.34 : about 1; or about 1.3 to about 1.34 : about 1. By adjusting the above-mentioned atomic ratio, the surface energy of the tantalum carbide film may be lowered to prevent contaminants from being attached, damage to the substrate 100 by plasma and corrosive gas in a process environment (e.g., a semiconductor manufacturing process) may be prevented, and lifespan and process stability of a part to which the tantalum carbide composite material is applied may be improved.

According to an embodiment, the tantalum carbide film 300 may be heat-treated after synthesis and/or deposition (e.g., CVD deposition), and for example, may be heat-treated at the temperature of 2,000°C to 2,500°C, in the inert gas (e.g., Ar gas) atmosphere, and for about 1 hour to about 20 hours; about 2 hours to about 20 hours; about 4 hours to about 20 hours; about 6 hours to about 20 hours; about 8 hours to about 18 hours; or about 8 hours to about 15 hours.

According to an embodiment, the tantalum carbide film 300 may include a thickness of about 10 µm (micrometer) to about 100 µm (micrometer). In some examples, the thickness may be about 10 µm to about 100 µm; about 10 µm to about 80 µm; about 10 µm to about 60 µm; about 10 µm to about 40 µm; or about 10 µm to about 20 µm.

According to an embodiment, the thickness ratio of the buffer layer 200 to the tantalum carbide film 300 may be about 0.1 : about 1 to about 0.01 : about 1. In some examples, the thickness ratio of the buffer layer 200 to the tantalum carbide film 300 may preferably be about 0.08 : about 1 to about 0.05 : about 1. In some examples, when the thickness ratio is within the above-mentioned range, stress due to a difference in coefficient of thermal expansion between the substrate 100 and the tantalum carbide layer 300 may be reduced, thereby preventing occurrence of cracks, pinholes, and the like, in the tantalum carbide film 300, and lifespan and process stability of a part to which the tantalum carbide composite material is applied may be improved.

According to an embodiment, the tantalum carbide film 300 may be crack-free or may include a crack in at least one or more of a surface, an interior, or a contact surface with the buffer layer 200 of the tantalum carbide film 300. In some examples, the surface of the tantalum carbide film 300 may include a crack. In some examples, the tantalum carbide film 300 may include a fine crack having a width of about 0.3 µm (micrometer) to about 0.6 µm (micrometer). For example, the tantalum carbide film 300 may include a fine crack having a width of about 0.3 µm to about 0.55 µm; about 0.3 µm to about 0.5 µm; about 0.3 µm to about 0.4 µm; or about 0.3 µm to about 0.35 µm. In some examples, the width of the crack refers to a measured width of a fine crack generated in a carbon material including a tantalum carbide coating layer, and the width of the crack represents an average of values obtained by observing an image of a crack area at 2000x magnification using SEM analysis equipment (e.g., SEM model name: JEOL, JSM-6390) and measuring a gap between cracks in a vertical direction at 10 points. In some examples, at least one or more of the surface, the interior, or the contact surface with the buffer layer of the tantalum carbide film 300 may be crack-free.

According to an embodiment, the coefficient of thermal expansion (CTE) of the substrate 100 may be about 6 x 10⁻⁶/K or less; about 5 x 10⁻⁶/K or less; or about 4 x 10⁻⁶/K or less. In some examples, the coefficient of thermal expansion (CTE) of the substrate 100 may be about 4 x 10⁻⁶/K to about 6 x 10⁻⁶/K.

According to an embodiment, among the coefficients of thermal expansion (CTE) (e.g., average coefficient of thermal expansion) of the buffer layer 200, the coefficient of thermal expansion in the lateral direction of the formation surface of the buffer layer 200 in FIGS. 1A and 1B is about 0.3 x 10⁻⁶/K or more and about 0.5 x 10⁻⁶/K or less, and the coefficient of thermal expansion in the vertical direction of the formation surface of the buffer layer 200 in FIGS. 1A and 1B may be about 6.0 x 10⁶/K or more and about 7.0 x 10⁻⁶/K or less. According to an embodiment, in the buffer layer 200, a bonding force in the vertical direction of the formation surface according to Van-der-Waals bonding may be weaker than a bonding force in the lateral direction of the formation surface (e.g., covalent bonding), and even if the coefficient of thermal expansion in the lateral direction of the formation surface of the buffer layer is very low, when expanding in the lateral direction of the formation surface as TaC thermally expands (e.g., expands at high temperature), lateral bonding of the formation surface is not broken, and vertical bonding of the formation surface is broken, and internal delamination (or multiple delamination) occurs, and interlayer sliding may occur among Van-der-Waals bonding (FIGS. 7A and 7B). That is, if the buffer layer 200 has a layered structure by Van-der-Waals bonding, the buffer layer 200 may be effectively expanded in accordance with the expansion of TaC through internal interlayer sliding in such a layered structure.

According to an embodiment, the coefficient of thermal expansion in the vertical direction of the formation surface of the buffer layer 200 may satisfy at least one or more of the following conditions i), ii), and iii):
i) lower than the coefficient of thermal expansion of the tantalum carbide film 300;
ii) higher than the coefficient of thermal expansion of the substrate (e.g., the substrate 100 in FIGS. 1A and 1B); and
iii) higher than an intermediate value of coefficients of thermal expansion of the substrate (e.g., the substrate 100 in FIGS. 1A and 1B) and the tantalum carbide film 300.

According to an embodiment, the ratio of the coefficient of thermal expansion in the vertical direction of the formation surface to the coefficient of thermal expansion in the lateral direction of the formation surface in the buffer layer 200 may be about 1 : (greater than) about 1 to about 14; about 1 : (greater than) about 1 to about 14; about 1 : (greater than) about 1 to about 12; about 1 : (greater than) about 1 to about 10; about 1 : (greater than) about 1 to about 8; about 1 : (greater than) about 1 to about 5; about 1 : about 1.1 to about 3; about 1 : about 1.1 to about 2.5; about 1 : about 1.1 to about 2.2; about 1 : about 1.1 to about 2; about 1 : about 1.1 to about 1.8; about 1 : about 1.1 to about 1.6; about 1 : about 1.1 to about 1.4; or about 1 : about 1.1 to about 1.2.

According to an embodiment, the intermediate value of the coefficient of thermal expansion in the vertical direction (e.g., b or d in FIGS. 1A and 1B) of the formation surface of the buffer layer 200 to coefficients of thermal expansion of the substrate 100 and the tantalum carbide layer 300 may be about 1.1 to about 1.9 : about 1; about 1.1 to about 1.8 : about 1; about 1.1 to about 1.7 : about 1; about 1.1 to about 1.5 : about 1; about 1.1 to about 1.4 : about 1; about 1.1 to about 1.3 : about 1; about 1.1 to about 1.2 : about 1; or 1 : 1.2.

In this document, the vertical direction of the formation surface of the buffer layer 100 corresponds to a growth direction (or a deposition direction) of the buffer layer on the substrate 100. Referring to FIGS. 1A and 1B, in this document, the vertical direction of the formation surface of the buffer layer means the Z-axis direction in FIG. 1A, and when the deposition layer is formed on the entire surface so as to surround the substrate 100 as in FIG. 1B, it means the vertical direction with respect to the formation surfaces 110, 120, 130, and 140 of the buffer layer 200 of the substrate 100.

In this document, the lateral direction of the formation surface of the buffer layer may be the X-axis direction or the Y-axis direction in the case of FIG. 1A. When the deposition layer is formed on the entire surface so as to surround the substrate 100 as in FIG. 1B, the lateral direction of the formation surface of the buffer layer means all directions parallel to each of the formation surfaces 110, 120, 130, and 140 in the formation surfaces 110, 120, 130, and 140 of the buffer layer 200 of the substrate 100 in FIG. 1B.

According to an embodiment, the coefficient of thermal expansion (CTE) (e.g., average coefficient of thermal expansion) of the tantalum carbide film 300 may be greater than about 6 x 10⁻⁶/K; about 7 x 10⁻⁶/K or more; or about 8 x 10⁻⁶/K or more. In some examples, the coefficient of thermal expansion (CTE) of the tantalum carbide film 300 may be greater than about 6 x 10⁻⁶/K to about 7 x 10⁻⁶/K; about 6.1 x 10⁻⁶/K to about 7 x 10⁻⁶/K; or about 6.3 x 10⁻⁶/K to about 7 x 10⁻⁶/K.

According to an embodiment, the coefficient of thermal expansion may be measured at room temperature to 1000°C using a thermal expansion coefficient meter (DIL 402C). In this document, the coefficient of thermal expansion may mean a maximum, minimum, or average value.

According to an embodiment, the warpage of the tantalum carbide composite material may be about 10 µm to about 50 µm. In some examples, the warpage may be about 10 µm to about 50 µm; about 10 µm to about 40 µm; about 10 µm to about 30 µm; or about 10 µm to about 20 µm. A method of measuring warpage of the tantalum carbide composite material according to a preferred embodiment of the present disclosure may be a measurement method including (a) fabricating a tantalum carbide coated product having a size of ø 200 x 3 mm; (b) measuring a height of the product based on an upper half of a CMM (3-dimensional shape) measuring instrument; and (c) measuring at 10 points each at equal intervals of 0°, 60°, and 120°, and may include expressing a deviation of values measured at a total of 30 points as warpage.

According to an embodiment, by adjusting a difference in coefficient of thermal expansion (CTE) between the substrate 100 and the tantalum carbide layer 300, the substrate of a part (e.g., a semiconductor manufacturing part) (e.g., a part for plasma processing) to which the tantalum carbide composite material is applied may be protected in an extreme environment such as high temperature, plasma, and corrosive gas, and lifespan and process stability of the part may be improved. In some examples, although there is a difference in coefficient of thermal expansion between the substrate 100 and the tantalum carbide layer 300, stress relaxation is induced by introduction of the buffer layer 200 to prevent cracking, delamination, and the like, of the tantalum carbide film 300, and the substrate of a part (e.g., a semiconductor manufacturing part) (e.g., a part for plasma processing) to which the tantalum carbide composite material is applied may be protected in a process environment including high temperature, plasma, corrosive gas, and the like, and lifespan and process stability of the part may be improved.

According to an embodiment, a part including the tantalum carbide composite material of the present disclosure may be provided. As an example, the tantalum carbide composite material may include contents mentioned in the description of the tantalum carbide composite material mentioned above. As an example, the part may be a part used in a semiconductor process. For example, the part may be a part of single crystal SiC/AlN Epitaxy and SiC/AlN Growth process equipment.

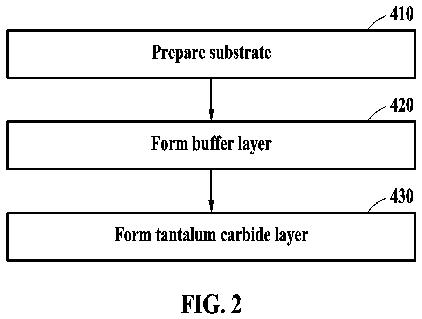

According to an embodiment, FIG. 2 shows a process flow diagram of a method of manufacturing a tantalum carbide composite material according to embodiments of the present disclosure, and referring to FIG. 2, the manufacturing method may include preparing a substrate 410; forming a buffer layer 420; and forming a tantalum carbide layer 430.

According to an embodiment, the preparing of the substrate 410 may prepare the substrate (e.g., the substrate 100 in FIGS. 1A and 1B) mentioned in the description of the tantalum carbide composite material (e.g., the tantalum carbide composite material in FIGS. 1A and 1B) of the present disclosure.

According to an embodiment, the substrate (e.g., the substrate 100 in FIGS. 1A and 1B) prepared in the preparing of the substrate 410 may be loaded into a deposition chamber and evacuated to a vacuum state.

According to an embodiment, the forming of the buffer layer 420 may be forming a buffer layer (e.g., the buffer layer 200 in FIGS. 1A and 1B) on a substrate (e.g., the substrate 100 in FIGS. 1A and 1B). According to an embodiment, the buffer layer (e.g., the buffer layer 200 in FIGS. 1A and 1B) may be formed on at least a portion of at least one surface or an entire surface of the substrate (e.g., the substrate 100 in FIGS. 1A and 1B). According to an embodiment, the buffer layer (e.g., the buffer layer 200 in FIGS. 1A and 1B) may be formed on at least a portion or an entirety of the entire surface of the substrate (e.g., the substrate 100 in FIGS. 1A and 1B). Preferably, the buffer layer (e.g., the buffer layer 200 in FIGS. 1A and 1B) may be formed as a single film on the entire surface of the substrate (e.g., the substrate 100 in FIGS. 1A and 1B). In some examples, the buffer layer (e.g., the buffer layer 200 in FIGS. 1A and 1B) may be a single layer or a plurality of layers.

According to an embodiment, the forming of the buffer layer 420 may deposit the buffer layer at the temperature (e.g., the deposition temperature, the CVD deposition temperature, or the heat treatment temperature) of about 1,100°C to about 2,000°C; about 1,300°C to about 2,000°C; about 1,400°C to about 2,000°C; about 1,500°C to about 1,900°C; about 1,600°C to about 1,900°C; or about 1,700°C to about 1,900°C, and the pressure of about 400 torr to about 1,000 torr; about 500 torr to about 1,000 torr; or about 500 torr to about 900 torr.

According to an embodiment, the forming of the buffer layer 420 may deposit the buffer layer by supplying a raw material for buffer layer deposition at the above-mentioned temperature and pressure conditions. In some examples, a raw material gas and a carrier gas may be supplied. In some examples, the raw material gas may be selected as a raw material gas suitable for deposition (e.g., CVD) depending on a constituent component of the buffer layer. For example, when the buffer layer is pyrolytic carbon, a hydrocarbon gas of at least one or more of propane (C₃H₈), butane (C₄H₁₀), propylene (C₃H₆), or acetylene (C₂H₂), or a combination thereof is supplied, and a buffer layer deposited with a carbon-based material generated by pyrolyzing the hydrocarbon gas at the above-mentioned process conditions may be obtained. In some examples, the carrier gas may be selected from hydrogen (H₂), argon, or nitrogen.

According to an embodiment, the forming of the buffer layer 420 forms a buffer layer (e.g., the buffer layer 200 in FIG. 1A or FIG. 1B) including a material of Van-der-Waals bonding, and the material of Van-der-Waals bonding may include at least one of pyrolytic carbon, BN, MoS₂, WSe₂, ReS₂, and MoTe₂, or a combination thereof. According to an embodiment, the forming of the buffer layer 420 may use a source material for forming (e.g., depositing) the material of Van-der-Waals bonding, and the source material may be appropriately selected depending on a forming process (e.g., a deposition process). According to an embodiment, the source material may be appropriately selected depending on the process in a phase such as gas or solid (powder). In some examples, in examples of the source material, pyrolytic carbon may be formed by pyrolyzing a carbon-based material including at least one or more selected from hydrocarbons (CₓH_{y}) (where x and y are natural numbers and 1<x<6). For example, the hydrocarbon may be selected from propane (C₃H₈), butane (C₄H₁₀), propylene (C₃H₆), or acetylene (C₂H₂), and combinations thereof. In some examples, an example of the source material may be, but is not limited to, a BN source material (e.g., B₂H₆ and/or NH₃), a MoS₂ source material (e.g., S powder and MoO₂ powder), a WSe₂ source material (e.g., WO₃ powder and Se gas), a ReS₂ source material (e.g., NH₄ReO₄ (ammonium perrhenate) (precursor (solid)) and S gas), or a MoTe₂ source material (e.g., Te powder + MoCl₅ and MoO₃ powder).

According to an embodiment, the forming of the tantalum carbide layer 420 forms a tantalum carbide film on a buffer layer (e.g., the buffer layer 200 in FIGS. 1A and 1B), and may synthesize or deposit (e.g., CVD deposition) a tantalum carbide film (e.g., the tantalum carbide film 300 in FIGS. 1A and 1B) on at least a portion or the entirety of the buffer layer (e.g., the buffer layer 200 in FIGS. 1A and 1B).

According to an embodiment, the forming of the tantalum carbide layer 420 may deposit the tantalum carbide film (e.g., the tantalum carbide film 300 in FIGS. 1A and 1B) at the temperature of about 1,800°C to about 2,300°C; about 1,900°C to about 2,300°C; or about 2,000°C to about 2,300°C, and the pressure of about 200 torr to about 400 torr. According to an embodiment, the forming of the tantalum carbide layer 420 may deposit the tantalum carbide film by supplying a raw material for tantalum carbide film deposition at the above-mentioned temperature and pressure conditions. In some examples, a raw material gas and a carrier gas may be supplied. In some examples, the raw material gas may be selected as a raw material gas suitable for a deposition process (e.g., CVD). In some examples, if the raw material gas is a raw material for supplying Ta and C (carbon), known materials in the technical field of the present disclosure may be applied, and are not specifically mentioned in this document. In some examples, the atomic ratio of Ta to C in the raw material gas may be about 0.9 to about 1.34 : about 1; about 0.1 to about 1.34 : about 1; about 1 to about 1.34 : about 1; or about 1.1 to about 1.34 : about 1. In some examples, the carrier gas may be selected from an inert gas.

According to an embodiment, after the forming of the tantalum carbide layer 430, cooling or heat treatment to room temperature (rt) or the temperature close to room temperature may be performed. For example, after the forming of the tantalum carbide layer 430, heat treatment may be performed at the temperature of about 2,000°C to about 2,500°C, in the inert gas (e.g., Ar gas) atmosphere, and for about 1 hour to about 20 hours; about 2 hours to about 20 hours; about 4 hours to about 20 hours; about 6 hours to about 20 hours; about 8 hours to about 18 hours; or about 8 hours to about 15 hours. After the heat treatment, cooling to room temperature (rt) or the temperature close to room temperature may be performed.

According to an embodiment, the forming of the buffer layer 420 and the forming of the tantalum carbide layer 430 may use various deposition processes such as chemical vapor deposition (CVD), physical vapor deposition (PVD), plasma chemical vapor deposition, and sputtering, and preferably, a CVD process may be used to form a material layer for stress relaxation.

Numerical ranges described in this document may be indicated or interpreted as below, above, less than, and/or greater than for specific values within the range as long as they do not deviate from the purpose and scope of the present disclosure. "At least one or more" described in this document may mean one or a mixture of two or more.

Hereinafter, the present disclosure will be described in detail based on examples and comparative examples. However, the following examples are only for illustrating the present disclosure, and the present disclosure is not limited to the following examples.

### Example 1

The coefficient of thermal expansion of a graphite substrate was 4.5 x 10⁻⁶/K, and after depositing a pyrolytic carbon (PyC) layer on a substrate to the thickness of 5 µm by the CVD deposition method, a TaC layer was formed on the pyrolytic carbon (PyC) layer by the CVD deposition method.

### Example 2

The coefficient of thermal expansion of a graphite substrate was 4.5 x 10⁻⁶/K, and after depositing a pyrolytic carbon (PyC) layer on a substrate to the thickness of 15 µm by the CVD deposition method, a TaC layer was formed on the pyrolytic carbon (PyC) layer by the CVD deposition method.

### Example 3

The coefficient of thermal expansion of a graphite substrate was 4.5 x 10⁻⁶/K, and after depositing a pyrolytic carbon (PyC) layer on a substrate to the thickness of 25 µm by the CVD deposition method, a TaC layer was formed on the pyrolytic carbon (PyC) layer by the CVD deposition method.

### Example 4

The coefficient of thermal expansion of a graphite substrate was 5.5 x 10⁻⁶/K, and after depositing a pyrolytic carbon layer on a substrate to the thickness of 5 µm by the CVD deposition method, a TaC layer was formed on the pyrolytic carbon (PyC) layer by the CVD deposition method.

### Comparative Example 1

A TaC composite material was manufactured in the same manner as in Example 1 except that a buffer layer was not formed.

### Comparative Example 2

A TaC composite material was manufactured in the same manner as in Example 4 except that a buffer layer was not formed.

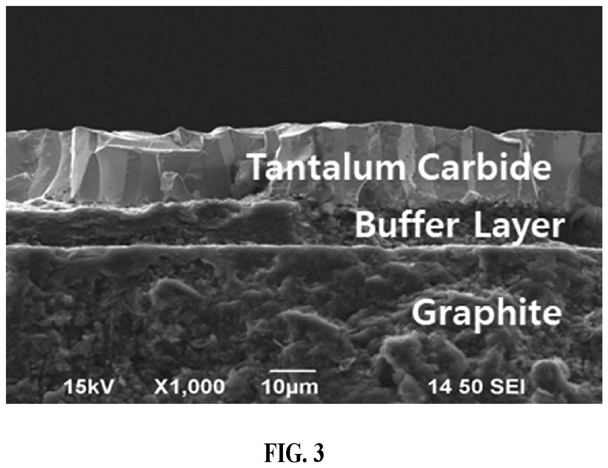

Cross-sectional observation of the TaC composite material manufactured in Example 1 was performed by measuring a scanning electron microscope (SEM) image. The result is shown in FIG. 3. In FIG. 3, it is confirmed that a pyrolytic carbon layer/TaC layer is formed on the graphite substrate. In addition, in the TaC composite material manufactured in the Example, a deposition layer is formed on an entire surface of the substrate and the buffer layer as shown in FIG. 1A.

### Example Deposition Process

A graphite substrate was loaded into a deposition chamber, and after vacuum evacuation for 1 hour to 20 hours, deposition of a pyrolytic carbon (PyC) layer was performed. That is, the pyrolytic carbon (PyC) layer was deposited while supplying a raw material C₃H₈ with a first carrier gas H₂ at the heating temperature of 1,700°C, the process pressure of 400 torr, and the N₂ gas atmosphere condition. Next, TaC was deposited while supplying a raw material Ta with a second carrier gas Ar and CH₄ at the heating temperature of 2,100°C and the process pressure of 400 torr condition. After the deposition process, cooling to room temperature was performed.

### Comparative Example Deposition Process

A graphite substrate was loaded into a deposition chamber, and after vacuum evacuation for 1 hour to 20 hours, TaC was deposited while supplying a raw material Ta with a second carrier gas Ar and CH₄ at the heating temperature of 2, 100°C and the process pressure of 400 torr condition. After the deposition process, cooling to room temperature was performed.

### Surface Microstructure Analysis

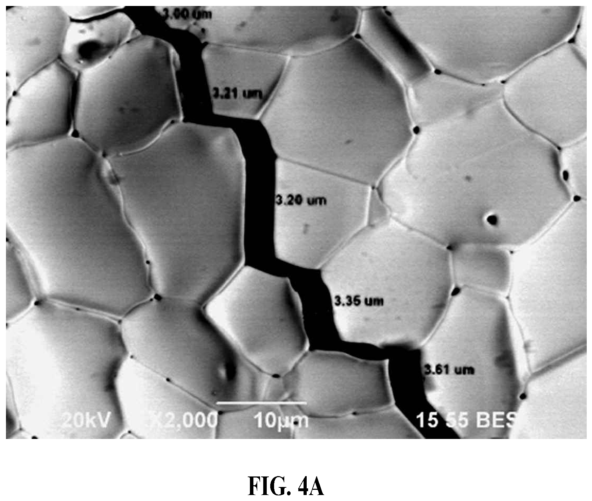

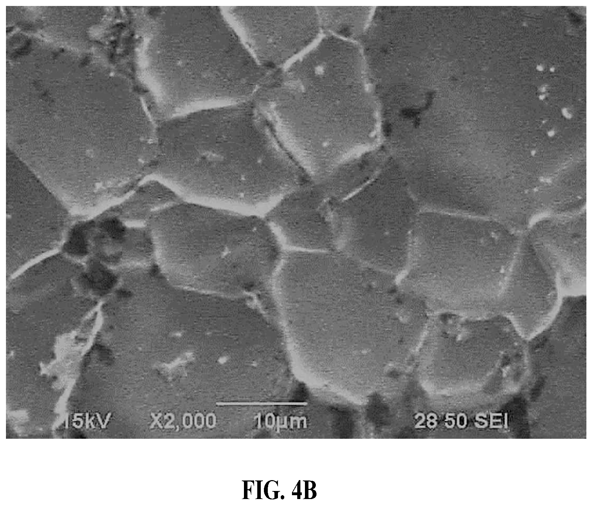

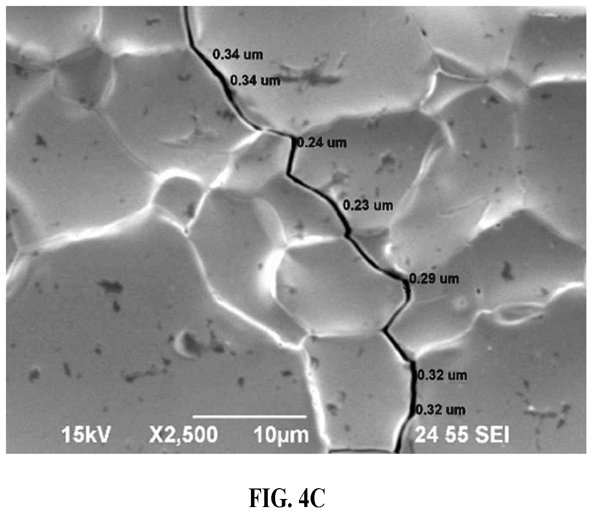

Surface microstructures of the TaC manufactured in Examples and Comparative Examples were observed by SEM, and results of crack width are shown in FIGS. 4A, 4B, and 4C and Table 1.

**[Table 1]**

| Classification | Comparative Example 1 | Comparative Example 2 | Example 1 | Example 2 | Example 3 | Example 4 |
|---|---|---|---|---|---|---|
| CTE of Substrate | 4.5 x 10⁻⁶/K | 5.5 x 10⁻⁶/K | 4.5 x 10⁻⁶/K | 4.5 x 10⁻⁶/K | 4.5 x 10⁻⁶/K | 5.5 x 10⁻⁶/K |
| Buffer Layer | None | None | Present | Present | Present | Present |
| Buffer Layer Thickness | - | - | 5µm | 10µm | 25µm | 5µm |
| Average Width of Cracks Occurring on Surface of TaC Grain Boundaries( µm) | 3.3 | 1.1 | 0.36 | 0.51 | 0.55 | Crack Free |

| | | | | | | |
|---|---|---|---|---|---|---|
| *The average width corresponds to an average value of cracks measured at 20 points. Warpage Measurement | | | | | | |

Warpage of the composite materials of Examples and Comparative Examples was measured. The results are shown in Table 2.

### Warpage Measurement Method

A tantalum carbide coated product having a size of ø 200 x 3 mm was fabricated, and a height of the product was measured based on an upper half of a CMM measuring instrument. That is, the height of the product was measured at 10 points each at equal intervals at 0°, 60°, and 120° intervals. A deviation of values measured at 30 points was expressed as Warpage.

**Table 2]**

| Classification | | Comparative Example 1 | Example 1 | Example 2 | Example 3 |
|---|---|---|---|---|---|
| CTE of Substrate | | 4.5 x 10⁻⁶/K | 4.5 x 10⁻⁶/K | 4.5 x 10⁻⁶/K | 4.5 x 10⁻⁶/K |
| Buffer Layer | | None | Present | Present | Present |
| Buffer Layer Thickness | | - | 5µm | 15µm | 25µm |
| Warpage | Warpage (µm) | 198 | 14 | 27 | 40 |

FIGS. 4A, 4B, and 4C are SEM images measured for a surface of the TaC layer in the TaC composite material, and are SEM images of (a) Comparative Example 1, (b) Example 4, and (c) Example 1, respectively. In FIGS. 4A, 4B, and 4C, the cracks on the surfaces were observed through SEM images of the composite materials of Examples and Comparative Examples, and in Comparative Example 1, the crack width of the TaC surface was large, and when a gap between cracks was measured in the vertical direction, the gap corresponds to a level of 3.0 µm to 3.6 µm at maximum. This is due to internal stress generation between the graphite substrate and TaC. In Example 1 and Example 3 in which a buffer layer is introduced, when a gap between cracks is measured in the vertical direction, a fine crack at a level of 0.2 µm to 0.4 µm width at maximum (Example 1) is generated or no crack is observed (Example 4). That is, although a difference in coefficient of thermal expansion between the graphite substrate and TaC occurs, stress therebetween is alleviated by introduction of the buffer layer, so that a crack width on a surface of the TaC layer may be reduced or occurrence of cracking and warpage may be lowered to reduce a possibility of delamination.

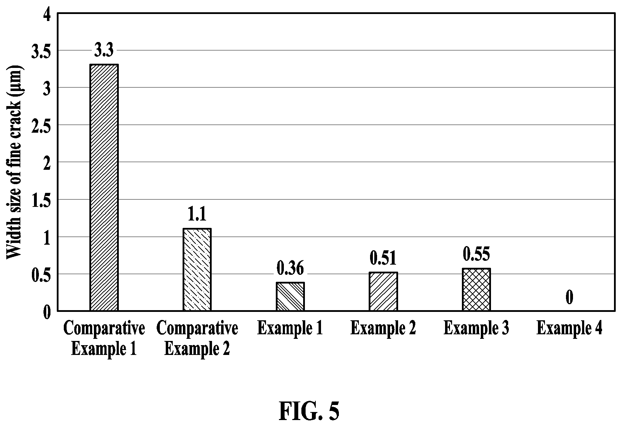

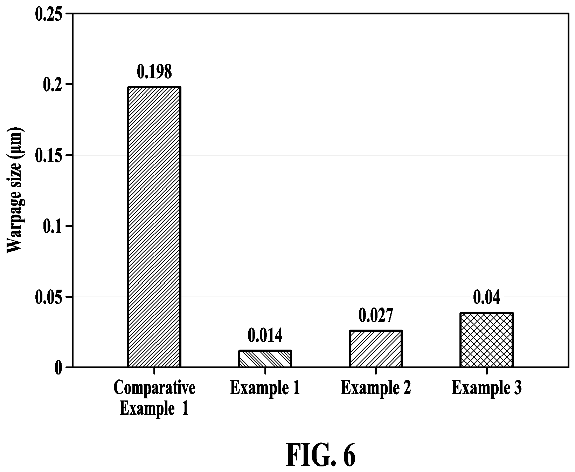

In FIG. 5, when a buffer layer is applied, an effect of reducing the width (µm) of a fine crack on the surface of the TaC layer by up to 2.8 times (e.g., comparison of Example 1 and Comparative Example 1) may be provided. In addition, it is confirmed that the width size of the fine crack changes depending on the thickness of the buffer layer. In FIG. 6, when a buffer layer is applied, an effect of reducing the warpage on the surface of the TaC layer by up to 14 times (e.g., comparison of Example 1 and Comparative Example 1) may be provided. In addition, it is confirmed that the warpage changes depending on the thickness of the buffer layer. Table 3 shows the results of measuring stress change depending on the thicknesses of the pyrolytic carbon layer and TaC layer.

**Table 3]**

| Graphite Thickness | Buffer Layer Thickness | TaC Thickness | Von mises stress | TaC Coating Layer |
|---|---|---|---|---|
| (µm) | (µm) | (µm) | (Mpa) | Presence of delamination |
| 3000 | 0 | 1 | 727.5986 | X |
| | | 5 | 738.7861 | x |
| | | 50 | 889.9213 | O |
| | | 100 | 1078.3541 | O |
| | | 150 | 1107.3871 | O |
| | | 200 | 1264.6196 | O |
| | 1 | 1 | 664.7522 | X |
| | | 5 | 664.7564 | X |
| | | 50 | 665.1031 | X |
| | | 100 | 779.4215 | X |
| | | 150 | 987.3412 | O |
| | | 200 | 1001.3154 | O |
| | 3 | 1 | 665.3722 | X |
| | | 5 | 665.3763 | X |
| | | 50 | 665.4037 | X |
| | | 100 | 770.4152 | X |
| | | 150 | 977.1541 | O |
| | | 200 | 998.5254 | O |
| | 15 | 1 | 667.3387 | X |
| | | 5 | 667.3791 | X |
| | | 50 | 670.4057 | X |
| | | 100 | 777.5457 | X |
| | | 150 | 1047.1341 | O |
| | | 200 | 1127.4454 | O |
| | 20 | 1 | 672.3386 | X |
| | | 5 | 673.3771 | X |
| | | 50 | 691.2257 | X |
| | | 100 | 820.4357 | O |
| | | 150 | 1137.2341 | O |
| | | 200 | 1227.1115 | O |
| | 50 | 1 | 770.5315 | X |
| | | 5 | 824.1453 | O |
| | | 50 | 1127.3803 | O |
| | | 100 | 1188.325 | O |
| | | 150 | 1204.458 | O |
| | | 200 | 1555.7571 | O |
| | 100 | 1 | 779.5515 | X |
| | | 5 | 925.1451 | O |
| | | 50 | 1457.1716 | O |
| | | 100 | 1765.2154 | O |
| | | 150 | 2074.2703 | O |
| | | 200 | 2299.0879 | O |
| | 120 | 1 | 789.4414 | O |
| | | 5 | 945.2121 | O |
| | | 50 | 1534.1816 | O |
| | | 100 | 1861.2133 | O |
| | | 150 | 2174.2625 | O |
| | | 200 | 2399.0451 | O |

(In Table 3, "O" indicates occurrence of delamination, and "x" indicates non-occurrence of delamination.)
In Table 3, as the thickness of the pyrolytic carbon layer (buffer layer) decreases, a stress relaxation effect between the graphite substrate and the TaC layer increases, and occurrence of cracking may be prevented or lowered or the width size of the crack may be reduced, thereby lowering occurrence of delamination.

In addition, when the thickness of the buffer layer becomes thicker than a certain level, due to the coefficient of thermal expansion in the vertical direction (e.g., thickness direction) of the formation surface, the buffer layer may expand further in the vertical direction (e.g., thickness direction) than it expands by sliding in the lateral direction of the formation surface, which may cause warping and cracking.

In addition, in a case of forming a buffer layer by CVD, when the thickness of the buffer layer is less than 1 µm or lower, deposition of the TaC layer may not be properly performed.

Coefficients of thermal expansion for each of X, Y, and Z axis directions of the buffer layer formed on the substrate manufactured in Examples 1 to 4 were measured. Coefficients of thermal expansion were measured at 30 points at equal intervals for each direction, and average values thereof were obtained.

The coefficients of thermal expansion were measured from room temperature to 1000°C using the thermal expansion coefficient meter (DIL 402C).

According to an embodiment, the tantalum carbide composite material may reduce the width size of a crack of a tantalum carbide film and lower occurrence of warpage by introducing a buffer layer for stress relaxation between a substrate (e.g., a carbon substrate) and the tantalum carbide film.

According to an embodiment, a part for semiconductor manufacturing may improve lifespan stability by applying a tantalum carbide composite material in which a buffer layer for stress relaxation is introduced between a substrate (e.g., a carbon substrate) and a tantalum carbide film, and may improve process stability and process efficiency in a semiconductor manufacturing process.

According to an embodiment, there is no stress in a high-temperature CVD process due to a difference in physical properties between a graphite substrate and a TaC coating layer, but stress is generated due to a difference in physical properties between two materials during a cooling process, and in particular, stress may be largely generated by the coefficient of thermal expansion. As a result, the generated stress mainly appears as distortion or cracking phenomena, and a degree of damage may increase with an increase in the number of uses of a part (the degree of damage is accumulated when heating and cooling increase). Accordingly, the tantalum carbide composite material, according to an embodiment, may improve stress by forming a buffer layer (e.g., pyrolytic carbon) having intermediate physical properties between graphite and TaC. Stress may be alleviated by using a difference between the coefficient of thermal expansion (e.g., an average value) according to the lateral direction (X-axis, Y-axis) and the vertical direction (Z-axis) of a formation surface of the buffer layer (e.g., pyrolytic carbon) and coefficients of thermal expansion of the graphite substrate and the TaC coating layer.

According to an embodiment, since TaC having a high CTE is finally deposited, a buffer layer is unable to withstand expansion of TaC when using an existing buffer layer material. However, the composite material, according to embodiments of the present disclosure, forms a buffer layer of Van-der-Waals bonding, in which a CTE in the lateral direction of a formation surface is lower than that in the vertical direction, on a substrate in a layered structure (e.g., using CVD), whereby the buffer layer is able to withstand expansion of TaC through internal interlayer sliding by using Van-der-Waals bonding characteristics. Referring to FIGS. 7A and 7B, FIGS. 7A and 7B schematically show an example of a stress relaxation mechanism using a tantalum carbide composite material according to embodiments of the present disclosure, according to an embodiment, and in FIGS. 7A and 7B, Van-der-Waals bonding, which is a characteristic of the buffer layer, has a bonding force in the vertical direction of a formation surface that is very weak compared to a bonding force in the lateral direction of the formation surface (covalent bonding). Due to this, even if the coefficient of thermal expansion in the lateral direction of the formation surface of the buffer layer is very low, when expanding in the lateral direction of the formation surface as TaC thermally expands, lateral bonding of the formation surface is not broken and vertical bonding of the formation surface is broken, and internal delamination occurs and interlayer sliding (a cut line at the right side 200 in FIG. 7B) occurs. Since numerous Van-der-Waals bonding layers exist in a layered structure (lines inside 200 at the upper and left sides in FIGS. 7A and 7B) with respect to a deposition surface inside the buffer layer, internal delamination may occur multiple times at numerous points. That is, due to numerous Van-der-Waals bonding layers, even if one layer itself is delaminated, the buffer layer is effectively expanded in accordance with the expansion of TaC without problems and is able to withstand the expansion of TaC.

According to an embodiment, the present disclosure may utilize a buffer layer having a layered structure by Van-der-Waals bonding rather than simply applying a buffer layer with a material having a CTE difference from a substrate and/or a coating layer (e.g., SiC or TaC), and a buffer layer capable of withstanding expansion of TaC through internal interlayer sliding by Van-der-Waals bonding characteristics may be used.

A number of example embodiments have been described above. Nevertheless, it should be understood that various modifications may be made to these example embodiments. For example, suitable results may be achieved if the described techniques are performed in a different order and/or if the described components are combined in a different manner and/or replaced or substituted by other components or their equivalents. Therefore, other implementations, other examples, and equivalents to the claims are also within the scope of the following claims.

## Claims

1. A tantalum carbide composite material, comprising:
a substrate;
a buffer layer deposited on the substrate; and
a tantalum carbide layer deposited on an upper surface of the buffer layer.

2. The tantalum carbide composite material of claim 1, wherein the buffer layer comprises a material of Van-der-Waals bonding.

3. The tantalum carbide composite material of claim 2, wherein the material of Van-der-Waals bonding comprises at least one of pyrolytic carbon, BN, MoS₂, WSe₂, ReS₂, and MoTe₂, or a combination thereof.

4. The tantalum carbide composite material of claim 1, wherein the buffer layer has a coefficient of thermal expansion in a lateral direction of a formation surface and a coefficient of thermal expansion in a vertical direction of the formation surface that are different from each other.

5. The tantalum carbide composite material of claim 4, wherein the coefficient of thermal expansion in the vertical direction of the formation surface of the buffer layer is greater than the coefficient of thermal expansion in the lateral direction of the formation surface.

6. The tantalum carbide composite material of claim 5, wherein the coefficient of thermal expansion in the vertical direction of the formation surface of the buffer layer is 6.0 x 10⁻⁶/K to 7.0 x 10⁻⁶/K, and the coefficient of thermal expansion in the lateral direction of the formation surface of the buffer layer is 0.2 x 10⁻⁶/K to 0.7 x 10⁻⁶/K.

7. The tantalum carbide composite material of claim 4,
wherein the coefficient of thermal expansion in the vertical direction of the formation surface of the buffer layer satisfies at least one of the following conditions i), ii), and iii):
i) lower than a coefficient of thermal expansion of the tantalum carbide layer;
ii) higher than a coefficient of thermal expansion of the substrate; and
iii) higher than an intermediate value of coefficients of thermal expansion of the substrate and the tantalum carbide layer.

8. The tantalum carbide composite material of claim 1,
wherein a thickness of the buffer layer is 1 µm (micrometer) to 100 µm (micrometer).

9. The tantalum carbide composite material of claim 1,
wherein a thickness of the tantalum carbide layer is 1 µm (micrometer) to 100 µm (micrometer).

10. The tantalum carbide composite material of claim 1,
wherein the buffer layer is formed in a layered structure with respect to an upper surface of the substrate.

11. The tantalum carbide composite material of claim 1,
wherein the tantalum carbide layer is crack-free.

12. The tantalum carbide composite material of claim 1,
wherein warpage of the tantalum carbide composite material is 10 µm (micrometer) to 50 µm (micrometer).

13. The tantalum carbide composite material of claim 1,
wherein the tantalum carbide layer comprises a crack having a width of 0.3 µm (micrometer) to 0.6 µm (micrometer).

14. A method of manufacturing a tantalum carbide composite material, the method comprising:
preparing a substrate;
forming a buffer layer on the substrate; and
forming a tantalum carbide layer on the buffer layer,
wherein the buffer layer comprises a material of Van-der-Waals bonding, and
the buffer layer is formed on at least one surface or an entire surface of the substrate.

15. The method of claim 14,
wherein the forming of the tantalum carbide layer forms a single film on the buffer layer.

16. The method of claim 14,
wherein the forming of the buffer layer deposits the buffer layer at a temperature of 1,500°C to 1,900°C and a pressure of 500 torr to 900 torr.

17. The method of claim 14,
wherein the forming of the tantalum carbide layer deposits a tantalum carbide film at a temperature of 1,900°C to 2,300°C and a pressure of 200 torr to 400 torr.

18. The method of claim 14,
wherein the forming of the buffer layer and the forming of the tantalum carbide layer use a CVD process.

19. The method of claim 14,
wherein the forming of the buffer layer forms a buffer layer comprising a material of Van-der-Waals bonding, and
the material of Van-der-Waals bonding comprises at least one of pyrolytic carbon, BN, MoS₂, WSe₂, ReS₂, and MoTe₂, or a combination thereof.

20. The method of claim 14,
wherein the method manufactures the tantalum carbide composite material of claim 1.
